(19) Europäisches Patentamt
European Patent Office
Office européen des brevets

(11) **EP 1 828 740 B1**

(12) **EUROPÄISCHE PATENTSCHRIFT**

(45) Veröffentlichungstag und Bekanntmachung des Hinweises auf die Patenterteilung:
**16.04.2008 Patentblatt 2008/16**

(21) Anmeldenummer: **05819962.1**

(22) Anmeldetag: **22.12.2005**

(51) Int Cl.:
***G01M 9/06*** (2006.01)   ***G01M 9/04*** (2006.01)
***G01L 5/16*** (2006.01)

(86) Internationale Anmeldenummer:
**PCT/EP2005/013901**

(87) Internationale Veröffentlichungsnummer:
**WO 2006/066933 (29.06.2006 Gazette 2006/26)**

(54) **VERFAHREN UND VORRICHTUNG ZUR VERBESSERUNG DER GENAUIGKEIT VON WINDKANALMESSUNGEN ZUR KORREKTUR DES EINFLUSSES EINER AUFHAENGUNGSVORRICHTUNG**

METHOD AND APPARATUS FOR IMPROVING THE ACCURACY OF WIND TUNNEL MEASUREMENTS IN ORDER TO CORRECT THE INFLUENCE OF A SUSPENSION DEVICE

PROCEDE ET DISPOSITIF D'AUGMENTATION DE LA PRECISION DE MESURES EN SOUFFLERIE AFIN DE CORRIGER L'INFLUENCE D'UN SYSTEME DE SUSPENSION

(84) Benannte Vertragsstaaten:
**DE FR GB IT SE**

(30) Priorität: **22.12.2004 DE 102004063096**

(43) Veröffentlichungstag der Anmeldung:
**05.09.2007 Patentblatt 2007/36**

(73) Patentinhaber: **Airbus Deutschland GmbH**
**21129 Hamburg (DE)**

(72) Erfinder:
• **SCHWETZLER, Detlev**
**27755 Delmenhorst (DE)**
• **MAY, Peter**
**28307 Bremen (DE)**

(74) Vertreter: **Maiwald Patentanwalts GmbH**
**Elisenhof**
**Elisenstraße 3**
**80335 München (DE)**

(56) Entgegenhaltungen:
**US-A- 2 448 528    US-A- 2 768 526**
**US-A- 3 276 251**

• **PATENT ABSTRACTS OF JAPAN Bd. 1996, Nr. 03, 29. März 1996 (1996-03-29) -& JP 07 301578 A (MITSUBISHI HEAVY IND LTD), 14. November 1995 (1995-11-14) in der Anmeldung erwähnt**
• **PATENT ABSTRACTS OF JAPAN Bd. 016, Nr. 019 (P-1300), 17. Januar 1992 (1992-01-17) -& JP 03 237335 A (CHINKOU HIGASHIJIMA), 23. Oktober 1991 (1991-10-23) in der Anmeldung erwähnt**
• **PATENT ABSTRACTS OF JAPAN Bd. 2003, Nr. 03, 5. Mai 2003 (2003-05-05) -& JP 2002 323403 A (MIZUNO CORP), 8. November 2002 (2002-11-08) in der Anmeldung erwähnt**

EP 1 828 740 B1

**Beschreibung**

Die Erfindung betrifft ein Verfahren zur Verbesserung der Genauigkeit von Windkanalmessungen zur Korrektur des Einflusses einer Aufhängungsvorrichtung, wobei ein Modell an der mehrere Aufhängungsdrähte aufweisenden Aufhängungsvorrichtung in einen Windkanal eingebracht wird und mindestens eine Hülse auf jeweils einen Aufhängungsdraht zur Vergrößerung eines Aufhängungsdrahtdurchmessers auf einen Wirkdurchmesser aufgebracht wird.

Weiterhin betrifft die Erfindung eine Vorrichtung zur Durchführung des Verfahrens zur Verbesserung der Genauigkeit von Windkanalmessungen zur Korrektur des Einflusses einer Aufhängungsvorrichtung, wobei ein Modell an der mehrere Aufhängungsdrähte aufweisenden Aufhängungsvorrichtung in einem Windkanal angeordnet ist.

Nach dem Stand der Technik erfolgt die Einbringung von Modellen in die Luftströmung eines Windkanals mit Hilfe einer so genannten Modellaufhängung. Die Auswahl der für ein bestimmtes Modell optimalen Aufhängung erfolgt unter Berücksichtigung der verfügbaren Ausrüstung des Windkanals und der jeweiligen Versuchskriterien.

Im Verlauf der bisherigen Entwicklung der Windkanaltechnologie gelangte eine Vielzahl unterschiedlicher Ausführungsformen von Stiel- und Drahtaufhängungen zur Anwendung.

Allen Aufhängungen ist jedoch ein mehr oder weniger großer Einfluss auf die Modellumströmung und somit eine Verfälschung der Messergebnisse für das Modell gemeinsam. In Abhängigkeit von der verwendeten Methode zur Messung der Luftkräfte, beispielsweise mittels einer modellinternen oder einer externen Windkanalwaage, werden durch die Art der Aufhängung unterschiedliche Messfehler verursacht, die nach unterschiedlichen Verfahren zu korrigieren sind.

Modelle mit internen Waagen haben zum Beispiel den Vorteil, dass keine direkt an der Aufhängung angreifenden Luftkräfte mit gemessen werden. Es müssen also nur die Interferenzen zwischen dem Modell und der Aufhängung sowie die Nachlaufeinflüsse der Aufhängung auf das Modell korrigiert werden. Nachteilig an den internen Waagen ist aber deren im Vergleich zu den externen Waagen geringe Genauigkeit.

Externe Windkanalwaagen moderner Bauart zeichnen sich demgegenüber durch eine hohe Genauigkeit und Stabilität aus. Die am Modell angreifenden Luftkräfte müssen jedoch über die Aufhängung auf die Waage übertragen werden. Ebenfalls übertragen werden die Luftkraftanteile der Aufhängung, sofern sie nicht durch eine Abschirmung ausgeschaltet werden können. Das Ergebnis einer Messung mit einer externen Waage besteht daher aus Modell- und Aufhängungsanteilen sowie den Interferenzanteilen zwischen dem Modell und der Aufhängung. Die Genauigkeit der Modellmessung hängt damit direkt von der Genauigkeit ab, mit der die in den Messwerten enthaltenen direkten und indirekten Aufhängungsanteile bestimmt und korrigiert werden können.

Ein oft verwendetes Aufhängungssystem ist die so genannte "Drahtaufhängung". Hierbei wird der zu vermessende Modellkörper mittels mehrerer, nach einem vorgegebenen Schema angeordneter Drähte mit der Windkanalwaage verbunden. Der im Messwert enthaltene Anteil der Drähte kann auf unterschiedliche Art und Weise bestimmt werden.

Der Einfluss der Aufhängungsdrähte kann zum einen numerisch aus den Messwerten herausgerechnet werden. Hierzu werden die Aufhängungsdrähte mathematisch idealisiert als quer und schräg angeströmte Zylinder aufgefasst. Die strömungstechnischen Eigenschaften von Zylindern sind aus der Literatur hinlänglich bekannt, sodass die Messwerte zur Elimination des Einflusses der Aufhängungsdrähte entsprechend numerisch korrigiert werden können. Zum anderen kann auch eine eigenständige Messung der Drahtaufhängung erfolgen, wobei das Modell aus dem Windkanal entfernt wird.

Beiden Vorgehensweisen ist jedoch gemeinsam, dass die Interferenzanteile zwischen dem Modell und der Drahtaufhängung nicht miterfasst werden, sodass sich Ungenauigkeiten der mit diesen Verfahren ermittelten Aufhängungskorrekturen ergeben. Darüber hinaus erfordern beide Vorgehensweisen einen relativ hohen Aufwand.

Die JP 03 237 335 A betrifft weiterhin ein Verfahren zur Messung von Kräften und Momenten, die auf ein an drei Drahtpaaren in einem Windkanal aufgehängtes Flugzeugmodell einwirken. Die endgültigen Messergebnisse werden jeweils mit und ohne Luftanströmung im Windkanal aus den Messwerten mittels spezieller mathematischer Ausdrücke ermittelt, um die Messergebnisse bei einer möglichst großen Variationsbreite von Flugzuständen des Flugzeugmodells zu erfassen. Eine Messung von Luftwiderstandskräften bei unterschiedlichen Aufhängungsdrahtdurchmessern des Flugzeugmodells zur rechnerischen Interpolation auf einen Aufhängungsdrahtdurchmesser von Null erfolgt jedoch nicht.

Die JP 2002 323 403 A zeigt eine Messanordnung mit einem Rahmen, in den ein in Längsrichtung drehbarer Draht eingespannt ist. Auf dem Draht ist ein Golfball befestigt. Mittels eines Motors lässt sich der Draht zusammen mit dem Golfball in Rotation versetzen und es lassen sich so die auf den Golfball wirkenden Luftwidertandskräfte erfassen.

Die JP 07 301578 A zeigt eine Messeinrichtung in einem Windkanal mit einem an Drähten außerhalb des Windkanals beweglich aufgehängten Halterahmen. Innerhalb des Windkanals und damit im Luftstrom des Windkanals ist eine Probenplatte angeordnet, die wiederum mit Streben mit dem Halterahmen verbunden ist. Mittels eines über einen Draht mit dem Halterahmen verbundenen Messsensors lässt sich der Luftwiderstand der Probenplatte - unabhängig von anderen auf die Probenplatte wirkenden Kräften, zum Beispiel Auftriebskräften oder dergleichen - aufgrund der beweglichen Aufhängung der Probenplatte mittels der Drähte, des Halterahmens sowie der Streben bestimmen. Eine Messung bei unterschiedlichen Aufhängungsdrahtdurchmessern zur rechnerischen Interpolation auf einen Aufhängungsdrahtdurchmesser von Null erfolgt ebenfalls nicht.

Aufgabe der Erfindung ist es, den Einfluss der Drahtmodellaufhängung auf Windkanalmesswerte genauer zu kompensieren, um eine im Vergleich zu den vorbekannten Verfahren höhere Messgenauigkeit zu erzielen.

Diese Aufgabe wird durch ein Verfahren mit den Merkmalen des Patentanspruchs 1 gelöst.

Das erfindungsgemäße Verfahren zur Verbesserung der Genauigkeit von Windkanalmessungen zur Korrektur des Einflusses einer Aufhängungsvorrichtung umfasst die Schritte:

- Durchführung von mindestens zwei Messungen bei gleicher Modellkonfiguration bei jeweils mindestens einem Wirkdurchmesser und/oder beim Aufhängungsdrahtdurchmesser zur Ermittlung von mindestens zwei Rohmesswerten

- und Ermittlung eines korrigierten Endmesswertes für das Modell aus mindestens zwei Rohmesswerten.

Nach Maßgabe einer Ausführungsvariante des erfindungsgemäßen Verfahrens werden mindestens drei Messungen bei mindestens einem Wirkdurchmesser sowie beim Aufhängungsdrahtdurchmesser zur Ermittlung von mindestens drei Rohmesswerten durchgeführt.

Diese Vorgehensweise ermöglicht eine hinreichende Genauigkeit der Korrektur des Einflusses der Aufhängungsdrähte bei einem vertretbaren messtechnischen Aufwand.

Nach Maßgabe einer weiteren Ausführungsvariante des erfindungsgemäßen Verfahrens werden die Rohmesswerte zur Bestimmung des Endmesswertes auf einen Idealaufhängungsdrahtdurchmesser von Null extrapoliert.

Diese Vorgehensweise ermöglicht die Korrektur des Einflusses der Drahtaufhängung auf die Windkanalmessungen mit einem vergleichsweise geringen Auswertungsaufwand. Hierbei sind jedoch auf Grund des nichtlinearen Verlaufs des Luftwiderstandsbeiwertes der Drahtaufhängung in Abhängigkeit von den Wirkdurchmessern der Drähte mindestens drei Messungen erforderlich, sodass sich ein relativ hoher Messaufwand ergibt. Der Idealaufhängungsdrahtdurchmesser von Null entspricht hierbei einem, an fiktiven Aufhängungsdrähten, die jeweils einen Durchmesser von Null aufweisen, im Wandkanal angeordneten Modell, das somit in idealer Weise berührungslos angeordnet ist und von der Luft umströmt wird. Der Einfluss der Aufhängungsvorrichtung wird somit vollständig kompensiert.

Nach Maßgabe einer weiteren Ausführungsvariante werden zwischen jeweils mindestens zwei benachbarten Rohmesswerten mindestens zwei Differenzen zur Bestimmung des Endmesswertes ermittelt.

Diese Vorgehensweise ermöglicht eine hinreichend genaue Korrektur des Einflusses der Aufhängungsvorrichtung bei einem verringerten Auswertungsaufwand.

Eine weitere Ausführungsvariante des erfindungsgemäßen Verfahrens sieht vor, dass eine erste Messung bei einem ersten Wirkdurchmesser zur Ermittlung eines ersten Rohmesswertes durchgeführt wird und eine zweite Messung beim Aufhängungsdrahtdurchmesser zur Ermittlung eines zweiten Rohmesswertes durchgeführt wird, wobei der Endmesswert aus der Differenz zwischen dem Wirkdurchmesser und dem Aufhängungsdrahtdurchmesser sowie der Differenz der Rohmesswerte ermittelt wird.

Hierdurch ergibt sich eine ausreichend genaue Korrektur der Windkanalmesswerte, obgleich nur zwei Messwerte erfasst werden, wobei jedoch ein erhöhter mathematischer Aufwand betrieben werden muss. Der erste Rohmesswert wird mit einer ersten Messung ermittelt, bei der jeweils eine Hülse mit einem bestimmten Außendurchmesser auf die Aufhängungsdrähte zur Erhöhung des jeweiligen Wirkdurchmessers der Aufhängungsdrähte aufgeschoben ist. Der zweite Rohmesswert ergibt sich aus einer zweiten Messung mit vollständig entfernten Hülsen beim Aufhängungsdrahtdurchmesser. Aus den beiden Rohmesswerten lässt sich sodann die erforderliche Korrektur der Windkanalmesswerte numerisch ermitteln.

Nach Maßgabe einer weiteren vorteilhaften Ausgestaltung erfolgen die Messungen im Windkanal bei geringen Strömungsgeschwindigkeiten, insbesondere bei Strömungsgeschwindigkeiten von weniger als 300 m/s.

Eine weitere vorteilhafte Ausgestaltung sieht vor, dass die Hülsen insbesondere mit Kunststoffhohlzylindern und/oder mit Metallhohlzylindern gebildet werden.

Die auf den Aufhängungsdrähten angeordneten hohlzylindrischen Hülsen erlauben eine geometrisch exakt definierte Vergrößerung des aerodynamischen Wirkungsdurchmessers der Aufhängungsdrähte unter möglichst genauer Beibehaltung der für die Windkanalmessungen im Niedergeschwindigkeitsbereich gebräuchlichen Zylindergeometrie. Die Innen- bzw. die Außendurchmesser der Hülsen sind hierbei so aufeinander abgestimmt, dass sich diese jeweils koaxial übereinander und im koaxial übereinander geschobenen Zustand als "Paket" auf die Aufhängungsdrähte aufbringen lassen. Die Hülsen können mit Kunststoffhohlzylindern und/oder mit Metallhohlzylindern gebildet sein, die gleichzeitig eine hohe Oberflächengüte aufweisen, um unerwünschte Messungenauigkeiten zu vermeiden. Derartige Messungenauigkeiten können beispielsweise durch Oberflächenrauhigkeiten der Hülsen und/oder Abweichungen von der idealen Zylindergeometrie hervorgerufen werden.

Die Hülsen können alternativ auch durch Beschichtungen, durch Umwicklungen mit Folien oder dergleichen gebildet werden. Diese Beschichtungen können gleichfalls mit Kunststoffmaterialien und/oder mit metallischen Materialien gebildet werden. Hierbei muss allerdings eine ausreichende Genauigkeit der Zylindergeometrie sowie eine hinreichende Oberflächengüte der auf diese Art und Weise gebildeten Hülsen gewährleistet sein, um Messungenauigkeiten zu vermeiden.

Entscheidend für die Durchführung des erfindungsgemäßen Verfahrens ist, dass sich die Hülsen von den Aufhängungsdrähten wieder abnehmen lassen, ohne das Modell von den Aufhängungsdrähten abzulösen.

Werden auf die Aufhängungsdrähte beispielsweise koaxiale Hülsen in Form von Kunststoffhohlzylindern aufgeschoben, so lässt sich der Wirkdurchmesser durch Entfernen der jeweils äußeren Hülse bis herab zum Aufhängungsdrahtdurchmesser stufenweise exakt definiert verringern. Die Entfernung der Hülsen kann beispielsweise durch Aufschlitzen, Abschälen oder dergleichen der jeweils äußersten Hülse erfolgen.

Werden die Hülsen auf den Aufhängungsdrähten beispielsweise mit einer Beschichtung gebildet, so lässt sich der Wirkdurchmesser durch stufenweises oder kontinuierliches Abschälen mit einem geeigneten Werkzeug, beispielsweise einer ringförmige Ziehklinge oder dergleichen, verringern.

Werden die Hülsen auf den Aufhängungsdrähten beispielsweise mit umwickelten Folien gebildet, so lässt sich der Wirkdurchmesser auf einfache Art und Weise durch schrittweises Abwickeln entsprechend den Anforderungen reduzieren.

Nach Maßgabe einer weiteren vorteilhaften Ausgestaltung des erfindungsgemäßen Verfahrens stellen die Rohmesswerte insbesondere Widerstandsbeiwerte, Auftriebsbeiwerte, Seitenkraftbeiwerte, Rollmomentbeiwerte, Nickmomentbeiwerte sowie Giermomentbeiwerte des Modells, insbesondere des Flugzeugmodells, dar, aus denen ein entsprechend korrigierter Endmesswert ermittelt wird.

Mittels des erfindungsgemäßen Verfahrens lässt sich bei einer Vielzahl von unterschiedlichen Messwerten der Einfluss der Aufhängungsvorrichtung kompensieren.

Weiterhin wird die Aufgabe durch eine Vorrichtung mit den Merkmalen des Patentanspruchs 14 gelöst.

Dadurch, dass die Aufhängungsdrähte jeweils mindestens eine Hülse zur Vergrößerung eines Aufhängungsdrahtdurchmessers auf einen Wirkdurchmesser aufweisen,

ist eine einfache und vor allem genaue Korrektur des Einflusses der Authängungsdrähte auf die Windkanalmessungen möglich.

Weitere vorteilhafte Ausgestaltungen sind in weiteren Patentansprüchen niedergelegt.

In der Zeichnung zeigt:

Fig. 1 Ein Diagramm mit gemessenen Widerstandsbeiwerten eines an einer Drahtaufhängung in einem Windkanal aufgehängten Flugzeugmodells zur Korrektur des Einflusses der Drahtaufhängung nach einer ersten Variante des erfindungsgemäßen Verfahrens und

Fig. 2 ein Diagramm zur Veranschaulichung einer zweiten Variante des erfindungsgemäßen Verfahrens.

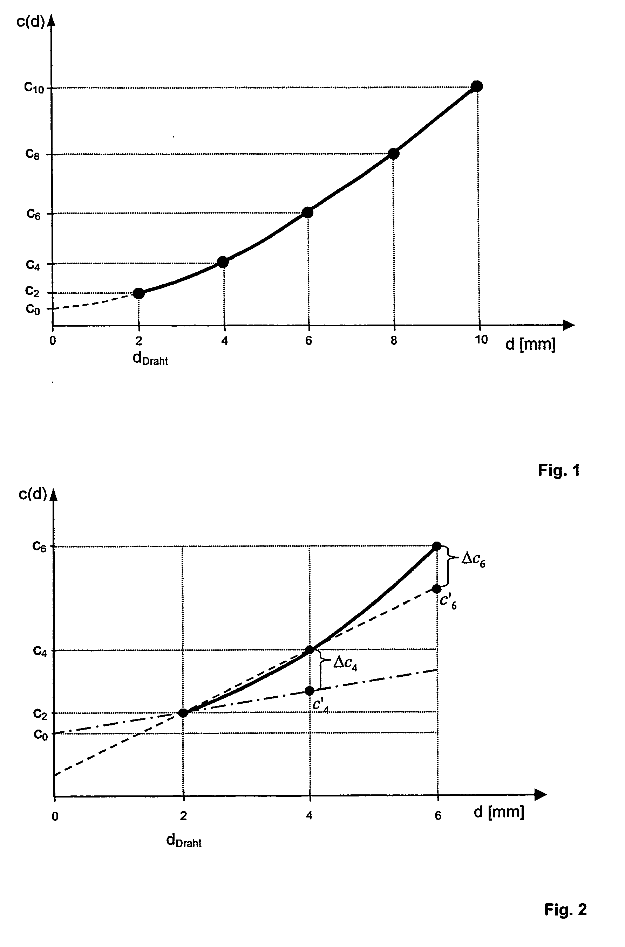

Die **Fig. 1** zeigt ein Diagramm mit gemessenen Widerstandsbeiwerten eines an einer Drahtaufhängung in einem Windkanal aufgehängten Flugzeugmodells, die nach einer ersten Variante des erfindungsgemäßen Verfahrens aufgenommen, ausgewertet und korrigiert werden.

Auf der Abszisse des Diagramms in der Fig. 1 sind die jeweiligen Wirkdurchmesser d der Aufhängungsdrähte in Millimetern aufgetragen. Ist auf dem jeweiligen Aufhängungsdraht keine Hülse zur Vergrößerung des Wirkdurchmessers im Windkanal aufgeschoben, so wird im Rahmen der Beschreibung des Verfahrens davon ausgegangen, dass der Wirkdurchmesser in diesem Fall gleich dem Aufhängungsdrahtdurchmesser ist. Auf der Ordinate sind beispielhaft die für jeweils einen Wirkdurchmesser gemessenen, unkorrigierten (Roh-)Widerstandsbeiwerte $c(d)$ des Flugzeugmodells, einschließlich der Drahtaufhängung sowie der Interferenzen zwischen dem Flugzeugmodell und der Drahtaufhängung, aufgetragen.

Der übliche Mindestdurchmesser von Aufhängungsdrähten einer Aufhängungsvorrichtung für Flugzeugmodelle im Windkanal beträgt, zumindest im Fall von Niedergeschwindigkeitswindkanälen, ungefähr zwei Millimeter, um eine noch ausreichende mechanische Festigkeit zu gewährleisten. In Abhängigkeit von den Abmessungen des zu untersuchenden Flugzeugmodells und/oder von dessen Masse können die Aufhängungsdrähte auch mehr oder weniger als zwei Millimeter Durchmesser aufweisen. Der Aufhängungsdrahtdurchmesser ohne die Hülsen zur Vergrößerung des Wirkdurchmessers bzw. der im Windkanal aerodynamisch wirksame Wirkdurchmesser der blanken Aufhängungsdrähte beträgt somit in etwa jeweils zwei Millimeter.

In der ersten Variante des erfindungs gemäßen Verfahrens wird in einem ersten vorbereitenden Verfahrensschritt zunächst jeweils eine erste Hülse mit einem Innendurchmesser von beispielsweise etwas mehr als 2 Millimetern auf die Aufhängungsdrähte der Aufhängungsvorrichtung aufgeschoben, wobei zwischen den jeweiligen Aufhängungsdrähten und den ersten Hülsen eine leichte Presspassung besteht, so dass sich die ersten Hülsen noch leicht auf die jeweiligen Aufhängungsdrähte aufschieben lassen, aber kein mechanisches Spiel besteht. Die Außendurchmesser bzw. die Wirkdurchmesser der ersten Hülsen betragen beispielsweise 4 Millimeter.

Über die ersten Hülsen wird jeweils eine zweite Hülse mit einem Innendurchmesser von etwas über 4 Millimetern aufgebracht, wobei zwischen den ersten Hülsen und den zweiten Hülsen gleichfalls eine leichte Presspassung besteht, so dass sich die zweiten Hülsen noch leicht auf die ersten Hülsen aufschieben lassen, aber kein mechanisches Spiel besteht. Die Außendurchmesser bzw. die Wirkdurchmesser der zweiten Hülsen betragen beispielsweise 6 Millimeter. Abschließend werden in gleicher Weise noch jeweils eine dritte Hülse mit einem Innendurchmesser von etwas mehr als 6 Millimetern und einem Außendurchmesser bzw. einem Wirkdurchmesser von 8 Millimetern auf die zweiten Hülsen aufgeschoben.

Es ergibt sich im Ergebnis eine koaxiale Anordnung der dritten, der zweiten, der ersten Hülsen sowie der Aufhängungsdrähte.

Die ersten, die zweiten sowie die dritten Hülsen sind beispielsweise mit einem Kunststoffinaterial gebildet und weisen im Wesentlichen eine hohlzylindrische geometrische Gestalt auf. Durch die Verwendung von Kunststoffmaterial und/ oder einem metallischen Material für die Hülsen lassen sich die Wirkdurchmesser der Aufhängungsdrähte jeweils durch Entfernung der äußeren Hülse relativ leicht und exakt definiert in Stufen von 2 mm reduzieren. Die Entfernung der jeweils äußeren Hülse kann beispielsweise durch Abschälen, Schlitzen, Abziehen der jeweils äußeren Hülse oder dergleichen erfolgen. Es ist hierbei aufgrund der koaxialen Anordnung der Hülsen nicht erforderlich, das Flugzeugmodell aus dem Windkanal zu entfernen bzw. von der Aufhängungsvorrichtung abzunehmen.

Alternativ können die Hülsen auch mit Beschichtungen, Umwicklungen oder dergleichen gebildet sein. In diesem Fall muss eine ausreichende Oberflächengüte und eine hinreichende Einhaltung der Zylindergeometrie gegeben sein, um Messungenauigkeiten zu vermeiden.

Zum Abschluss der vorbereitenden Verfahrensschritte wird das Modell, beispielsweise ein Flugzeugmodell, in bekannter Weise an den Aufhängungsdrähten der Aufhängungsvorrichtung in den Windkanal zur Durchführung der eigentlichen Messungen, beispielsweise für die Messung der Luftkraft und deren Angriffspunkt, eingehängt. Die Kräfte vom Modell werden in gleichfalls bekannter Weise über die Aufhängungsvorrichtung mit den Aufhängungsdrähten an eine geeignete Messwaage zur Zerlegung der Luftkraft in die Komponenten: Auftrieb, Widerstand und Seitenkraft, sowie die Momente: Roll-, Nick- und Giermoment um einen gewählten Bezugspunkt weitergeleitet. Aus den gemessenen Kräften und Momenten werden in bekannter Weise die dimensionslosen Beiwerte, beispielsweise die Widerstandsbeiwerte, gebildet.

In einem ersten Verfahrensschritt wird beispielsweise ein Widerstandsbeiwert $c_8$ des Flugzeugmodells einschließlich der Aufhängungsvorrichtung und der Interferenzen zwischen der Aufhängungsvorrichtung und dem Flugzeugmodell bei einem Wirkdurchmesser der Aufhängungsdrähte von jeweils 8 mm gemessen.

Zur Vorbereitung des zweiten Verfahrensschrittes wird zunächst die dritte Hülse von den Aufhängungsdrähten der Aufhängungsvorrichtung entfernt, sodass die Aufhängungsdrähte nur noch einen Wirkdurchmesser von jeweils 6 Millimetern aufweisen.

Im zweiten Verfahrensschritt wird zum Beispiel ein Widerstandsbeiwert $c_6$ des Flugzeugmodells einschließlich der Aufhängungsvorrichtung sowie der Interferenzen zwischen der Aufhängungsvorrichtung und dem Flugzeugmodell bei einem Wirkdurchmesser der Aufhängungsdrähte von jeweils 6 Millimetern gemessen.

Der Vorgang wird in weiteren Verfahrensschritten zur Ermittlung von $c_4$ und $c_2$ bei einem Wirkdurchmesser von 4 Millimetern und bei einem Wirkdurchmesser von 2 Millimetern entsprechend wiederholt, wobei der Wirkdurchmesser von 2 Millimetern schließlich durch die blanken Aufhängungsdrähte mit dem Aufhängungsdrahtdurchmesser realisiert wird.

Der Wirkdurchmesser der Aufhängungsdrähte wird im Verlauf des Verfahrens in drei Stufen von jeweils 8 mm auf jeweils 2 mm reduziert. Die angegebenen Größenverhältnisse sind nur Beispielsangaben, sodass hiervon abweichende geometrische Abmessungen der Hülsen und/oder der Aufhängungsdrähte gewählt werden können, ohne den Grundgedanken des erfindungsgemäßen Verfahrens zu verlassen. Auch können Messungen mit einer größeren Anzahl von Wirkdurchmessern durchgeführt werden.

Die sich aus den vier Rohmesswerten $c_8, c_6, c_4, c_2$ ergebenden gemessenen Widerstandsbeiwerte ergeben den, im Diagramm der Fig. 1 mit einer durchgezeichneten Linie in hoher Strickstärke dargestellten, abfallenden Kurvenverlauf $c(d)$. In Fortführung des erfindungsgemäßen Verfahrens wird dieser gemessene Kurvenverlauf, wie durch die gestrichelt dargestellte Linie angedeutet, auf den Endwiderstandsbeiwert $c_0$ bei einem Aufhängungsdrahtdurchmesser von null Millimetern ("Idealaufhängungsdrahtdurchmesser") hin extrapoliert. Die Extrapolation kann mit jedem geeigneten, insbesondere nicht linearen mathematischen Approximationsverfahren, erfolgen. Um eine möglichst genaue Korrektur des Einflusses der Aufhängungsvorrichtung auf die gemessenen Widerstandsbeiwerte zu erreichen, sollten die Messungen vorzugsweise mit mindestens drei verschiedenen Wirkdurchmessern der Aufhängungsdrähte durchgeführt werden, wodurch sich allerdings der messtechnische Aufwand erheblich vergrößert.

Aus der Extrapolation ergibt sich dann als Endmesswert beispielsweise der interpolierte Widerstandsbeiwert $c_0$, der einem Widerstandsbeiwert des Flugzeugmodells im Windkanal bei einem theoretischen, also idealen Aufhängungsdrahtdurchmesser von 0 Millimetern - also ohne jedweden Störeinfluss der Aufhängungsvorrichtung - entspricht. Damit ist der aerodynamische Einfluss der Aufhängungsvorrichtung, einschließlich der Interferenzen zwischen dem Flugzeugmodell und der Aufhängungsvorrichtung, hinreichend berücksichtigt bzw. korrigiert worden.

Die Rohmesswerte, beispielsweise in Form der Widerstandsbeiwerte des Flugzeugmodells einschließlich der Modellaufhängung, werden hierbei für sämtliche Aufhängungsvarianten im Windkanal, für jeden Kraft- und Momentenbeiwert getrennt und in Abhängigkeit von den jeweiligen Versuchsparametern (zum Beispiel der Mach-Zahl, der Reynolds-Zahl, der Modellkonfiguration, der Anstellwinkel und der Schiebewinkel) erfasst und jeweils in einem mit der Darstellung der Fig. 1 vergleichbaren Diagramm dargestellt und individuell durch Interpolation korrigiert, um den Einfluss der Aufhängungsvorrichtung zu eliminieren.

Mittels des erfindungsgemäßen Verfahrens lassen sich hierbei nicht nur Widerstandsbeiwerte von Flugzeugmodellen im Windkanal sondern auch Auftriebsbeiwerte, Seitenbeiwerte, Rollmomentbeiwerte, Nickmomentbeiwerte sowie Giermomentbeiwerte aus Windkanalmessungen im Hinblick auf den Einfluss der Aufhängungsvorrichtung korrigieren. Das Diagramm der Fig. 1 zeigt zusammenfassend ein Beispiel für die gemessenen Widerstandsbeiwerte einer Modellkonfiguration bei unterschiedlichen Drahtaufliängungsdurchmessern bei jeweils konstanter Mach-Zahl und konstantem Anstell- bzw. Schiebewinkel.

Die **Fig. 2** zeigt ein weiteres Diagramm zur Veranschaulichung einer zweiten Variante des erfindungsgemäßen Verfahrens wonach nur noch drei Rohmesswerte $c_2, c_4, c_6$ bei den Wirkdurchmessern $d_2$, $d_4$, $d_6$ der Aufhängungsdrähte gemessen werden. Die bei zunehmenden Wirkdurchmessern steigende Messkurve $c(d)$ ist im Diagramm der Fig. 2 durch den mit hoher Strichstärke ausgezeichneten, durchgezogenen Kurvenverlauf dargestellt. Bei der Auswertung wird im Weiteren davon ausgegangen, dass das $\Delta c_4$ gleich dem $\Delta c_6$ ist.

Zunächst gilt $\dfrac{c_4 - c_2}{d_4 - d_2} = \dfrac{c'_6 - c_2}{d_6 - d_2}$ (Gleichung 1). Weiterhin folgt aus dem Diagramm der Fig. 2, dass $\Delta c_6 = c_6 - c'_6$

(Gleichung 2) ist. Ferner gilt noch die Beziehung $\dfrac{c_2 - c_0}{d_2 - d_0} = \dfrac{c'_4 - c_0}{d_4 - d_0}$ (Gleichung 3). Schließlich gilt auch der Zusammenhang $\Delta c_4 = c_4 - c'_4 = \Delta c_6 = c_6 - c'_6$ (Gleichung 4). Setzt man nun $d_0 = 0$ für einen fiktiven Aufhängungsdrahtdurchmesser von Null, so ergibt sich aus der Gleichung 3 der gesuchte Wert für den Endmesswert $c_0$ zu

$$c_0 = \frac{d_2 \cdot c'_4 - d_4 \cdot c_2}{d_2 - d_4}$$ (Gleichung 5).

Aus der Gleichung 4 folgt weiterhin durch Umformung $c'_4 = c_4 - c_6 + c'_6$ (Gleichung 6). Aus der Gleichung 1 folgt ferner $c'_6 = c_2 + (c_4 - c_2) \cdot \dfrac{d_6 - d_2}{d_4 - d_2}$ (Gleichung 7). Setzt man die Gleichung 7 nunmehr in die Gleichung 6 ein, so ergibt sich nach Umformung und Ausklammern $c'_4$ zu

$$c'_4 = c_2 \cdot \left(1 - \frac{d_6 - d_2}{d_4 - d_2}\right) + c_4 \cdot \left(1 + \frac{d_6 - d_2}{d_4 - d_2}\right) - c_6 = A.$$ Wird der vollständige Term A in die Gleichung 5 eingesetzt, so ergibt sich der gesuchte, um den Einfluss der Aufhängungsdrähte sowie der Wechselwirkungen zwischen dem Flugzeugmodell und den Aufhängungsdrähten bereinigte Endmesswert $c_0$ zu $c_0 = \dfrac{d_2 \cdot A - d_4 \cdot c_2}{d_2 - d_4}$.

Die Auswertung erfolgt damit auf ähnliche Weise wie nach einer im Folgenden beschriebenen dritten Variante, wobei es aufgrund der drei verwendeten Rohmesswerte $c_2, c_4, c_6$ allerdings nicht erforderlich ist, einen Faktor $k$ aus einschlägigen Tabellenwerken für Strömungsmechanik zu entnehmen (siehe weiter unten).

Nach der dritten Variante des erfindungsgemäßen Verfahrens werden die korrigierten Widerstandsbeiwerte eines Flugzeugmodells aus lediglich zwei Messwerten ermittelt, wodurch sich im Vergleich zur ersten und zur zweiten Variante ein deutlich verringerter Messaufwand bei einem immer noch gut vertretbaren Messfehler ergibt. Der Einfluss der Anteile der Aufhängungsvorrichtung wird im Wesentlichen aus der gemessenen Differenz von zwei unterschiedlichen Aufhängungsdrahtdurchmessern bei jeweils gleichen Versuchsbedingungen, das heißt insbesondere bei gleicher räumlicher Anordnung des Modells im Windkanal und identischer Strömungsgeschwindigkeit der Luft im Windkanal, bestimmt. Die ermittelten Aufhängungsanteile für den Differenzdurchmesser werden dann erfindungsgemäß auf den Drahtdurchmesser der Aufhängungsvorrichtung ohne die aufgeschobenen Hülsen ("Basisaufhängung") umgerechnet und von den Messwerten der Messung "Modell mit Basisaufhängung" abgezogen.

Der Widerstandsbeiwert $c$ eines Modells, insbesondere eines Flugzeugs im Windkanal folgt aus der allgemeinen

Beziehung $c = \dfrac{W}{q_\infty \cdot F}$, wobei für den Staudruck $q_\infty$ die Formel $q_\infty = \dfrac{\rho}{2} \cdot v^2$ gilt. Hierbei ist $v$ die Strömungsgeschwindigkeit der Luft im Windkanal und $\rho$ ist die Dichte der Luft, die unter anderem vom Druck und der Temperatur abhängig ist. Der gemessene Gesamtwiderstandsbeiwert $c$ des Flugzeugmodells im Windkanal ergibt sich aus der Summe der Kraft des Flugzeugmodells $W_{Modell}$, der Kraft der Aufhängungsvorrichtung $W_{Draht}$ sowie aus den Interferenzkräften $\Delta W_{interferenz}$ zwischen dem Flugzeugmodell und der Aufhängungsvorrichtung jeweils in der w-Richtung.

Erfindungsgemäß wird in einer ersten Messung ein erster Widerstandsbeiwert $c_{D2} = c_{DModell} + c_{DA3.2F}$ des Flugzeugmodells einschließlich der Drahtaufhängungsvorrichtung und den daraus resultierenden Interferenzen bzw. Wechselwirkungen gemessen. Bei dieser ersten Messung sind auf die Aufhängungsdrähte jeweils Hülsen mit einem Außendurchmesser bzw. einem aerodynamischen Wirkdurchmesser von 3,2 mm aufgeschoben. Hierdurch ergibt sich ein aerodynamischer Wirkdurchmesser der Aufhängungsdrähte von 3,2 mm. Anschließend werden sämtliche Hülsen von den Aufhängungsdrähten entfernt und es wird eine zweite Messung beim Aufhängungsdrahtdurchmesser von 2,0 mm, das heißt mit blanken Aufhängungsdrähten ohne aufgeschobene Hülsen, sowie unveränderter Modellkonfiguration zur Ermittlung eines zweiten Widerstandsbeiwertes $c_{D2} = c_{DModell} + c_{DA2.0F}$ durchgeführt. Der Index F steht hierbei jeweils für auf die Modellfläche F bezogene Widerstandsbeiwerte. Der Widerstandsbeiwert des Flugzeugmodells wird in beiden Gleichungen durch den Term $c_{D\,Modell}$ repräsentiert.

Daher ist $\Delta c_D = \Delta c_{D1} - \Delta c_{D2} = c_{D\,Modell} + c_{DA3.2F} - c_{D\,Modell} + c_{DA2.0F} = c_{DA3.2F} - c_{DA2.0F}$ wobei sich der Widerstand $c_{D\,Modell}$ des Modells durch die Differenzbildung heraushebt.

Im Weiteren wird ein Wert $k = \dfrac{c_{DA3.2}}{c_{DA2.0}}$ aus einem einschlägigen Tabellenwerk für Strömungsmechanik bestimmt. Der Quotient $c_{DA3.2}$ entspricht hierbei dem Widerstandsbeiwert eines idealen Zylinders mit einem Außendurchmesser von 3,2 mm unter den hier gegebenen Versuchsbedingungen, insbesondere der Anströmgeschwindigkeit der Luft im Windkanal. Der Dividend $c_{DA2.0}$ steht entsprechend für den Widerstandsbeiwert eines idealen Zylinders mit einem Außendurchmesser von 2.0 mm unter den hier vorherrschenden Bedingungen im Windkanal.

Weiterhin gilt $c_{DA2.0F} = \Delta c_D \cdot \left(\dfrac{1}{k \cdot \dfrac{d_{3.2}}{d_{2.0}} - 1}\right).$ In diese Gleichung sind für $d_{3.2}$ sowie $d_{2.0}$ die Werte von 3,2 mm und 2,0 mm für die aerodynamischen Wirkdurchmesser der Aufhängungsdrähte (aerodynamisch wirksame Fläche) einzusetzen. Das $\Delta c_D$ folgt unmittelbar aus der Differenzbildung der beiden gemessenen Widerstandswerte $c_{D1}$ sowie $c_{D2}$ (siehe oben). Der Wert von $k$ ergibt sich, wie bereits erwähnt, aus den einschlägig bekannten Tabellenwerken der Strömungsmechanik.

Der erfindungsgemäß korrigierte, also um den Einfluss der Aufhängungsvorrichtung bereinigte, Widerstandsbeiwert $c_{D\,korrigiert}$ des Flugzeugmodells folgt schließlich aus der Beziehung $c_{D\,korrigiert} = c_{D2} - c_{DA2.0F}$, wobei der Wert $c_{D2}$ der zweite gemessene, unkorrigierte (Roh-)Widerstandsbeiwert ist, der bei einem Wirkdurchmesser von 2,0 mm bzw. mit den blanken Aufhängungsdrähten ohne die aufgeschobenen Hülsen ermittelt wurde.

Der Vorteil der dritten Variante gegenüber der ersten und der zweite Variante des erfindungsgemäßen Verfahrens liegt insbesondere in dem Umstand begründet, dass nur noch zwei Messungen im Windkanal mit zwei verschiedenen Wirkdurchmessern der Aufhängungsdrähte durchgeführt werden und dennoch eine ausreichende Genauigkeit der Korrektur erreicht wird.

**Patentansprüche**

1. Verfahren zur Verbesserung der Genauigkeit von Windkanalmessungen zur Korrektur des Einflusses einer Aufhängungsvorrichtung, wobei ein Modell an der mehrere Aufhängungsdrähte aufweisenden Aufliängungsvorrichtung in einen Windkanal eingebracht wird und mindestens eine Hülse auf jeweils einen Aufhängungsdraht zur Vergrößerung eines Aufhängungsdrahtdurchmessers auf einen Wirkdurchmesser aufgebracht wird, mit den folgenden Schritten:

   - Durchführung von mindestens zwei Messungen bei gleicher Modellkonfiguration bei jeweils mindestens einem Wirkdurchmesser und/oder beim Aufhängungsdrahtdurchmesser zur Ermittlung von mindestens zwei Rohmesswerten
   - und Ermittlung eines korrigierten Endmesswertes für das Modell aus mindestens zwei Rohmesswerten.

2. Verfahren nach Anspruch 1, **dadurch gekennzeichnet, dass** mindestens drei Messungen bei mindestens einem Wirkdurchmesser sowie beim Aufhängungsdrahtdurchmesser zur Ermittlung von mindestens drei Rohmesswerten durchgeführt werden.

3. Verfahren nach Anspruch 2, **dadurch gekennzeichnet, dass** die Rohmesswerte zur Bestimmung des Endmesswertes auf einen Idealaufhängungsdrahtdurchmesser von Null extrapoliert werden.

4. Verfahren nach Anspruch 2, **dadurch gekennzeichnet, dass** zwischen jeweils mindestens zwei benachbarten Rohmesswerten mindestens zwei Differenzen zur Bestimmung des Endmesswertes ermittelt werden.

5. Verfahren nach einem der Ansprüche 2 bis 4, **dadurch gekennzeichnet, dass** der Wirkdurchmesser der Aufhängungsdrähte nach jeder Messung durch das Entfernen jeweils einer Hülse in Stufen verringert wird.

6. Verfahren nach einem der Ansprüche 2 bis 5, **dadurch gekennzeichnet, dass** der Wirkdurchmesser der Aufhängungsdrähte solange verringert wird, bis der Aufhängungsdrahtdurchmesser erreicht ist.

7. Verfahren nach Anspruch 1, **dadurch gekennzeichnet, dass** eine erste Messung bei einem ersten Wirkdurchmesser zur Ermittlung eines ersten Rohmesswertes durchgeführt wird und eine zweite Messung beim Aufhängungsdrahtdurchmesser zur Ermittlung eines zweiten Rohmesswertes durchgeführt wird, wobei der Endmesswert aus der Differenz zwischen dem Wirkdurchmesser und dem Aufhängungsdrahtdurchmesser sowie der Differenz der Rohmesswerte ermittelt wird.

8. Verfahren nach einem der Ansprüche 1 bis 7, **dadurch gekennzeichnet, dass** die Aufhängungsvorrichtung mit einem Messsystem, insbesondere mit einer Messwaage, zur Ermittlung der Rohmesswerte verbunden wird.

9. Verfahren nach Anspruch 8, **dadurch gekennzeichnet, dass** die Messungen im Windkanal bei geringen Strömungsgeschwindigkeiten, insbesondere bei Strömungsgeschwindigkeiten von weniger als 300 m/s, erfolgen.

10. Verfahren nach Anspruch 8 oder 9, **dadurch gekennzeichnet, dass** die Hülsen insbesondere mit Kunststoffhohlzylindern und/oder mit Metallhohlzylindern gebildet werden.

11. Verfahren nach einem der Ansprüche 8 bis 10, **dadurch gekennzeichnet, dass** auf jeweils einen Aufhängungsdraht eine erste Hülse zur Erhöhung des Wirkdurchmessers aufgeschoben wird, deren Innendurchmesser in etwa dem Aufhängungsdrahtdurchmesser entspricht.

12. Verfahren nach einem der Ansprüche 8 bis 11, **dadurch gekennzeichnet, dass** weitere Hülsen jeweils auf die ersten Hülsen zur Erhöhung des Wirkdurchmessers aufgeschoben werden, wobei deren Innendurchmesser jeweils in etwa einem Außendurchmesser der ersten Hülse oder einer vorhergehenden Hülse entsprechen.

13. Verfahren nach einem der Ansprüche 8 bis 12, **dadurch gekennzeichnet, dass** die Rohmesswerte insbesondere Widerstandsbeiwerte, Auftriebsbeiwerte, Seitenkraftbeiwerte, Rollmomentbeiwerte, Nickmomentbeiwerte sowie Giermomentbeiwerte des Modells, insbesondere des Flugzeugmodells, darstellen, aus denen ein entsprechend korrigierter Endmesswert ermittelt wird.

14. Verfahren nach einem der Ansprüche 1 bis 13, **dadurch gekennzeichnet, dass** das Modell ein Flugzeugmodell ist.

15. Vorrichtung zur Durchführung des Verfahrens nach einem der Ansprüche 1 bis 14 zur Verbesserung der Genauigkeit von Windkanalmessungen, bestehend aus einen Modell, das an der mehrere Aufhängungsdrähte aufweisenden Aufhängungsvorrichtung in einem Windkanal angeordnet ist, **dadurch gekennzeichnet, dass** die Aufhängungsdrähte jeweils mindestens eine Hülse zur Vergrößerung eines Aufhängungsdrahtdurchmessers auf einen Wirkdurchmesser aufweisen.

16. Vorrichtung nach Anspruch 15, **dadurch gekennzeichnet, dass** die Hülsen insbesondere mit Kunststoffhohlzylindern und/oder mit Metallhohlzylindern gebildet sind.

17. Vorrichtung nach Anspruch 15 oder 16, **dadurch gekennzeichnet, dass** auf jeweils einen Aufhängungsdraht eine erste Hülse zur Erhöhung des Wirkdurchmessers aufschiebbar ist, deren Innendurchmesser in etwa dem Aufhängungsdrahtdurchmesser entspricht.

**18.** Vorrichtung nach einem der Ansprüche 15 bis 17, **dadurch gekennzeichnet, dass** auf die erste Hülse jeweils weitere Hülsen zur Vergrößerung des Wirkdurchmessers aufbringbar sind, deren Innendurchmesser in etwa einem Außendurchmesser der ersten Hülse oder einer vorhergehenden Hülse entspricht.

**19.** Vorrichtung nach einem der Ansprüche 15 bis 18, **dadurch gekennzeichnet, dass** das Modell ein Flugzeugmodell ist.

### Claims

**1.** Method of improving the precision of wind tunnel measurements to correct the influence of a suspension device, wherein a model on the suspension device, which has a plurality of suspension wires, is introduced into a wind tunnel and at least one sleeve is attached to each suspension wire to increase a suspension wire diameter to an effective diameter with the following steps:

- performance of at least two measurements with the same model configuration with at least one effective diameter and/or the suspension wire diameter to determine at least two raw measured values
- and determination of a corrected final measured value for the model from at least two raw measured values

**2.** Method according to claim 1, **characterised in that** at least three measurements are performed with at least one effective diameter and with the suspension wire diameter to determine least three raw measured values.

**3.** Method according to claim 2, **characterised in that** the raw measured values are extrapolated to an ideal suspension wire diameter of zero to determine the final measured value.

**4.** Method according to claim 2, **characterised in that** at least two differences are determined between at least two neighbouring raw measured values in each case to determine the final measured value.

**5.** Method according to any one of claims 2 to 4, **characterised in that** the effective diameter of the suspension wires is reduced in steps after each measurement by removing a sleeve in each case.

**6.** Method according to any one of claims 2 to 5, **characterised in that** the effective diameter of the suspension wires is reduced until the suspension wire diameter is reached

**7.** Method according to claim 1, **characterised in that** a first measurement is performed at a first effective diameter to determine a first raw measured value and a second measurement is performed at the suspension wire diameter to determine a second raw measured value, wherein the final measured value is determined from the difference between the effective diameter and the suspension wire diameter and the difference of the raw measured values

**8.** Method according to any one of claims 1 to 7, **characterised in that** the suspension device is connected to a measurement system, in particular to a measurement balance, to determine the raw measured values.

**9.** Method according to claim 8, **characterised in that** the measurements in the wind tunnel are performed at low flow velocities, in particular at flow velocities of less than 300 m/s.

**10.** Method according to claim 8 or claim 9, **characterised in that** the sleeves are in particular formed by plastic hollow cylinders and/or by metal hollow cylinders.

**11.** Method according to any one of claims 8 to 10, **characterised in that** a first sleeve, whose internal diameter approximately corresponds to the suspension wire diameter, is pushed onto each suspension wire to increase the effective diameter.

**12.** Method according to any one of claims 8 to 11, **characterised in that** further sleeves are pushed onto each of the first sleeves to increase the effective diameter, wherein their internal diameter approximately corresponds in each case to an external diameter of the first sleeve or a preceding sleeve.

**13.** Method according to any one of claims 8 to 12, **characterised in that** the raw measured values in particular represent resistance coefficients, lift coefficients, transverse force coefficients, rolling torque coefficients, pitch torque coefficients, and yaw torque coefficients of the model, in particular of the aircraft model, from which a corresponding corrected final measured value is determined.

14. Method according to any one of claims 1 to 13, **characterised in that** the model is an aircraft model.

15. Device for performing the method according to any one of claims 1 to 14 for improving the precision of wind tunnel measurements comprising a model which is arranged in a wind tunnel on the suspension device, which has multiple suspension wires, **characterised in that** the suspension wires each have at least one sleeve to enlarge a suspension wire diameter to an effective diameter.

16. Device according to claim 15, **characterised in that** the sleeves are in particular formed by plastic hollow cylinders and/or by metal hollow cylinders.

17. Device according to claim 15 or claim 16, **characterised in that** a first sleeve, whose internal diameter approximately corresponds to the suspension wire diameter, may be pushed onto each suspension wire to increase the effective diameter.

18. Device according to any one of claims 15 to 17, **characterised in that** further sleeves, whose internal diameter approximately corresponds to an external diameter of the first sleeve or a preceding sleeve, may be attached to each first sleeve to increase the effective diameter.

19. Device according to any one of claims 15 to 18, **characterised in that** the model is an aircraft model.

## Revendications

1. Procédé pour l'amélioration de la précision des mesures en soufflerie pour la correction de l'influence d'un dispositif de suspension, où un modèle est installé dans une soufflerie sur un dispositif de suspension présentant plusieurs câbles de suspension, et où au moins un manchon est monté sur chacun des câbles de suspension pour agrandir le diamètre du câble de suspension jusqu'à un diamètre effectif, comportant les étapes suivantes:

   - exécuter au moins deux mesures pour une même configuration de modèle, chacune pour au moins un diamètre effectif et/ou pour un diamètre du câble de suspension respectivement, pour déterminer au moins deux valeurs de mesures brutes,
   - déterminer une valeur de mesure corrigée finale pour le modèle à partir d'au moins deux valeurs de mesure brutes.

2. Procédé selon la revendication 1, **caractérisé en ce qu'**au moins trois mesures sont réalisées pour au moins un diamètre effectif ainsi que pour le diamètre du câble de suspension pour déterminer au moins trois valeurs de mesure brutes.

3. Procédé selon la revendication 2, **caractérisé en ce que** les valeurs de mesure brutes sont extrapolées de zéro jusqu'à un diamètre idéal du câble de suspension pour la détermination de la valeur de mesure finale.

4. Procédé selon la revendication 2, **caractérisé en ce qu'**au moins deux différences sont déterminées entre au moins deux valeurs de mesure brutes voisines respectives pour déterminer la valeur de mesure finale.

5. Procédé selon l'une des revendications 2 à 4, **caractérisé en ce que** le diamètre effectif des câbles de suspension est réduit par étapes après chaque mesure par le retrait d'un manchon à chaque fois.

6. Procédé selon l'une des revendications 2 à 5, **caractérisé en ce que** le diamètre effectif des câbles de suspension est réduit jusqu'à ce que le diamètre du câble de suspension soit atteint.

7. Procédé selon la revendication 1, **caractérisé en ce qu'**une première mesure est réalisée pour un premier diamètre effectif pour déterminer une première valeur de mesure brute, et une deuxième mesure est réalisée pour le diamètre du câble de suspension pour déterminer une deuxième valeur de mesure brute, où la valeur de mesure finale est déterminée à partir de la différence entre le diamètre effectif et le diamètre du câble de suspension ainsi que la différence entre les valeurs de mesure brutes.

**8.** Procédé selon l'une des revendications 1 à 7, **caractérisé en ce que** le dispositif de suspension est relié à un système de mesure, en particulier à une balance de mesure, pour la détermination des valeurs de mesure brutes.

**9.** Procédé selon la revendication 8, **caractérisé en ce que** les mesures dans la soufflerie sont réalisées sous faible vitesse d'écoulement, en particulier sous des vitesses d'écoulement inférieures à 300 m/s.

**10.** Procédé selon la revendication 8 ou 9, **caractérisé en ce que** les manchons sont constitués en particulier de cylindres creux en matière plastique et/ou de cylindres creux en métal.

**11.** Procédé selon l'une des revendications 8 à 10, **caractérisé en ce qu'un** premier manchon est monté sur chaque câble de suspension pour en augmenter le diamètre effectif, le diamètre interne du manchon correspondant à peu près au diamètre du câble de suspension.

**12.** Procédé selon l'une des revendications 8 à 11, **caractérisé en ce que** des manchons supplémentaires sont montés sur chacun des premiers manchons pour augmenter le diamètre effectif, le diamètre des manchons supplémentaires correspondant à peu près au diamètre externe des premiers manchons ou des manchons précédents.

**13.** Procédé selon l'une des revendications 8 à 12, **caractérisé en ce que** les valeurs de mesure brutes représentent en particulier les valeurs du coefficient de traînée, du coefficient de portance, du coefficient d'effort latéral, du coefficient de moment de roulis, du coefficient de moment de tangage ainsi que du coefficient de moment de lacet du modèle, en particulier du modèle d'avion, à partir desquelles une valeur de mesure finale corrigée correspondante sera déterminée.

**14.** Procédé selon l'une des revendications 1 à 13, **caractérisé en ce que** le modèle est un modèle d'avion.

**15.** Dispositif pour l'exécution du procédé selon l'une des revendications 1 à 14, pour l'amélioration de la précision des mesures en soufflerie, constitué d'un modèle installé dans une soufflerie à l'aide du dispositif de suspension présentant plusieurs câbles de suspension, **caractérisé en ce que** les câbles de suspension présentent chacun au moins un manchon pour augmenter le diamètre du câble de suspension jusqu'à un diamètre effectif.

**16.** Dispositif selon la revendication 15, **caractérisé en ce que** les manchons sont constitués en particulier de cylindres creux en matière plastique et/ou de cylindres creux en métal.

**17.** Dispositif selon la revendication 15 ou 16, **caractérisé en ce qu'**un premier manchon peut être monté sur chaque câble de suspension pour en augmenter le diamètre effectif, le diamètre interne du manchon correspondant à peu près au diamètre du câble de suspension.

**18.** Dispositif selon l'une des revendications 15 à 17, **caractérisé en ce que** des manchons supplémentaires peuvent être montés sur chacun des premiers manchons pour augmenter le diamètre effectif, le diamètre des manchons supplémentaires correspondant à peu près au diamètre externe des premiers manchons ou des manchons précédents.

**19.** Dispositif selon l'une des revendications 15 à 18, **caractérisé en ce que** le modèle est un modèle d'avion.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 03237335 A
- JP 2002323403 A
- JP 7301578 A